# EUROPEAN PATENT SPECIFICATION

(11) **EP 0 728 076 B1**
(45) Date of publication and mention of the grant of the patent: **22.03.2000**
(21) Application number: 95900232.0
(22) Date of filing: 09.11.1994
(51) Int. Cl.: B60B 33/02

(54) **TROLLEY HAVING A CASTOR LOCKING DEVICE**
EINKAUFSWAGEN MIT LENKROLLE MIT FESTSTELLEINRICHTUNG
CHARIOT AVEC UN DISPOSITIF DE BLOCAGE DE ROULETTE

(30) Priority: 09.11.1993 GB 9323014; 26.11.1993 GB 9324307; 03.09.1994 GB 9417736
(43) Date of publication of application: 28.08.1996
(73) Proprietor: Grantham, John, Inverurie, Aberdeenshire AB51 9NY (GB); Lovie, Michael Alexander, Rothiemay, Near Huntly, Aberdeenshire AB54 5JQ (GB)
(72) Inventor: Grantham, John, Inverurie, Aberdeenshire AB51 9NY (GB); Lovie, Michael Alexander, Rothiemay, Near Huntly, Aberdeenshire AB54 5JQ (GB)
(74) Representative: Pattullo, Norman
(86) International application number: GB9402466
(87) International publication number: WO9513199

(56) References cited:
- DE-A- 2 264 502
- DE-A- 3 625 139
- DE-U- 9 103 536
- GB-A- 2 269 095
- US-A- 4 349 938

## Description

This invention relates to a trolley having a castor locking device.

Shoppers require that trolleys in which shopping is placed, generally found in supermarkets, behave in an easily controllable manner. Trolleys often behave in a manner which is difficult to control when they are heavily laden or when travelling down a slope, for example to a car park or other area.

A number of devices are known which lock the castors of a trolley in one position which are dependent on the load on the trolley. Devices are also known which are manually operated and which can selectively lock or unlock the castors in a given direction. The known devices have the disadvantage that the trolley operator has to remember whether the castors are locked or rotating freely and operate the locking mechanism accordingly.

Document DE-U-9103536 describes a castor locking device which uses a hydraulic pump, which when actuated, pushes a piston, which moves a locking pin into, or out of engagement with an aperture to respectively lock or unlock the castors with respect to the trolley.

DE2264502 discloses a trolley according to the preamble of claim 1 having a push handle wherein the push handle is further connected by means of an operating rod to a castor locking device to prevent swivelling of the rear wheels. The handle is pivotably coupled to the trolley, such that when the handle is pushed forward to push the trolley forward, the connecting rod is pushed downwardly to operate the castor locking device.

DE3625139 discloses a trolley as having a handle which is pivotably coupled to the trolley. The handle is further coupled to an assembly of rods which at their lower end are coupled to a castor locking device such that movement of the handle either up or down moves the assembly rods to operate the castor locking device to prevent swivelling of the rear wheels.

According to the present invention there is provided a trolley having a steering handle, and a castor locking device comprising first and second members, said first member being attachable to a carrying member of the trolley, said second member being attachable to a wheel of the trolley and rotationally connected to said first member, and locking means are provided for locking the two members in a predetermined position by operation of a control means, wherein the locking means are only activated during the operation of the control means, characterised in that a spring arrangement is provided and the control means is sprung by the spring arrangement such that when the locking means is activated, the locking means locks said first and second members only when they are in their predetermined position, and where the control means is coupled to an operating lever such that the control means is operated by moving the operating lever and the steering handle towards one another.

Preferably, the first member is in fixed relation to a carrying member of the trolley and the second member is in fixed relation to the wheel.

Preferably, the first and second members are rotationally connected by means of bearings disposed between the members.

Preferably, the locking means for selectively locking the first and second members is in the form of a catch which when operated interacts with the first and second members preventing relative rotation of the members.

Preferably, release of the control means releases the locking means.

Preferably, the trolley comprises front and rear wheels in which any one or all of the front wheels have a castor locking device according to the present invention.

Embodiments of the present invention will now be described with reference to the accompanying drawings, in which:
Fig 1a is a side view of a castor locking device according to the present invention in an unlocked position;
Fig 1b is a side view of the castor locking device of Fig 1a in a locked position;
Fig 2a is a rear view of the castor locking device of Fig 1a;
Fig 2b is a plan view of the castor locking device of Fig 1a;
Fig 3a is a plan view of an embodiment of a castor locking device in accordance with the present invention with an alternative catch arrangement;
Fig 3b is a side view of the castor locking device of Fig 3a;
Fig 4a is a rear or front view of the castor locking device of Fig 3a;
Fig 4b is a perspective view of the castor locking device of Fig 3a;
Fig 5 is a side view of a trolley with a castor locking device of Fig 1;
Fig 6 is a front view of the trolley of Fig 5;
Fig 7a, b and c are schematic side views of a first embodiment of the castor locking device of Fig 1 in an unlocked, selected and locked position;
Fig 8a, b and c are schematic side views of a second embodiment of the castor locking device in accordance with the present invention in an unlocked, selected and locked position; and
Fig 8d is a plan of the castor locking device of Fig 8a.

Referring to the drawings, there is a trolley 14 having a castor locking device 10 which has a first member 1 and a second member 2, the first member 1 being in a fixed relationship with the basket 16 of the trolley 14. The second member 2 rotates in relation to the first member 1 and the second member 2 supports the axle and wheel of a castor of the trolley 14. Means are provided for selectively locking the two members 1 and 2 in the form of a locking device 4 with a locking catch 6 which prevents the relative rotation of the two members 1 and 2. The locking catch 6 is pivotally mounted on the first member 1 at a pivot point 23 and in the first embodiment of the invention the catch 6 is in the form of a bar 24 which engages in a slot 8 on the second member 2 when the catch 6 is operated by an operating lever 18.

The two members 1, 2 rotate by means of a plurality of bearings 3 between the first and second members 1, 2. The slot 8 in the second member 2 is aligned with the catch 6 on the first member 1 only when the castor of the trolley 14 is in a fore and aft position in relation to the trolley 14, with the axle 25 of the castor in a position orthogonal to the fore and aft position of the trolley 14.

The catch 6 is attached to a control rod 5 with a spring arrangement, the control rod 5 is attached to an operating lever 18 located on the steering handle 22 of the trolley 14. The operating lever 18 must be positively operated and the catch 6 is biased to ensure that the catch 6 springs into the slot 8 in the second member 2 as soon as the first and second members 1, 2 are aligned and the castor is in the fore and aft position. This will occur regardless of the position of the castor at the time when the operating lever 18 is activated.

The control means 5 can be in the form of a cable, push/pull rod, rotary shaft or a combination of these arrangements.

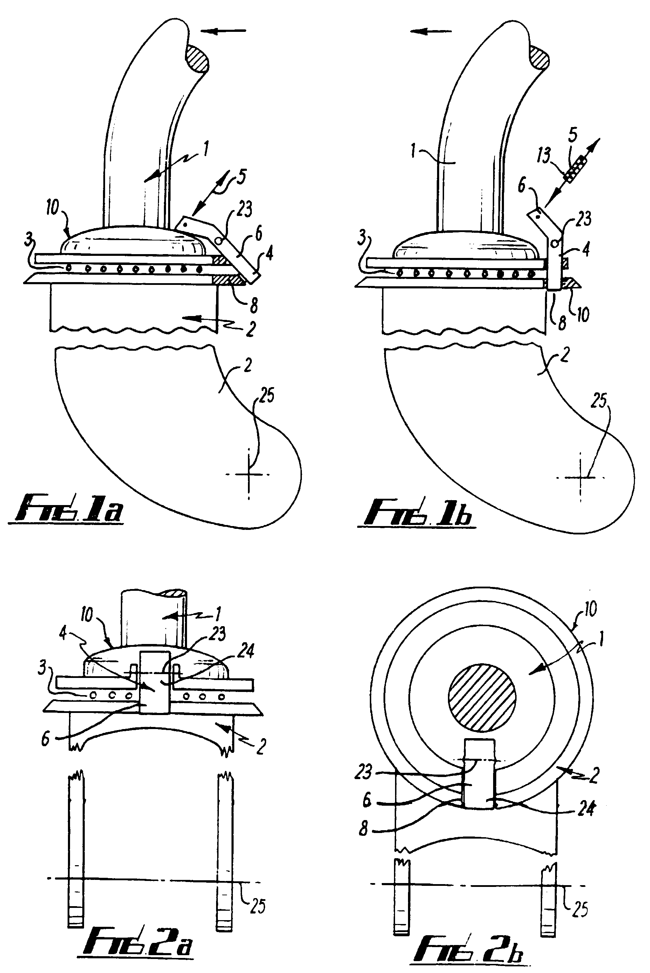

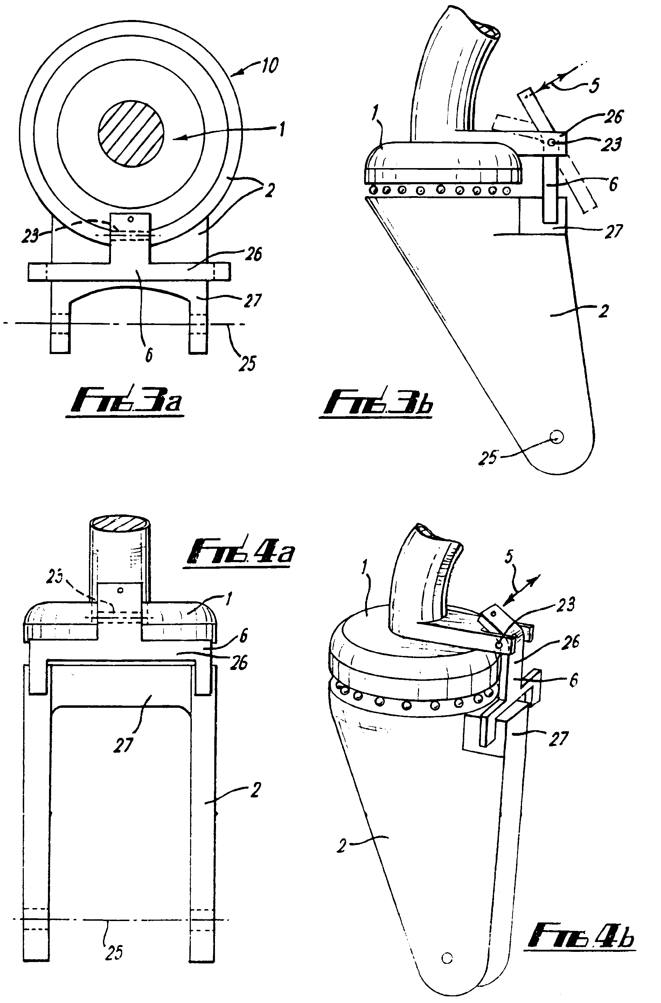

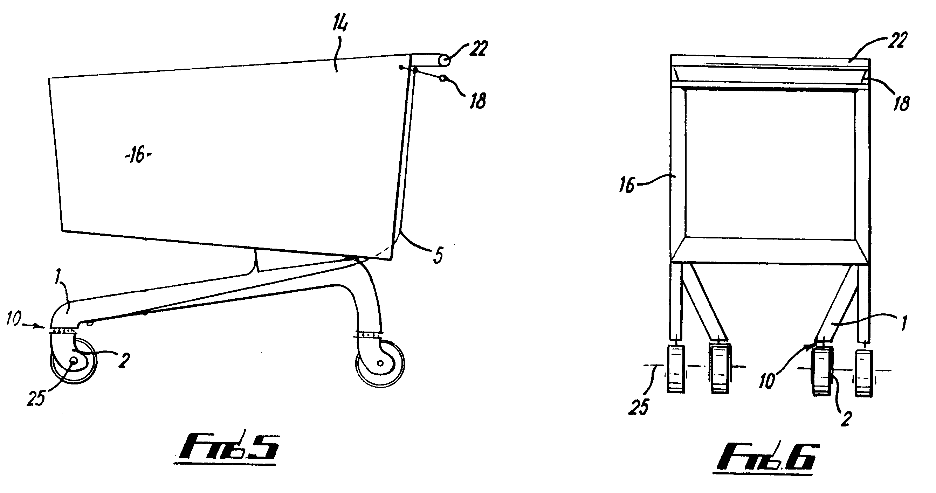

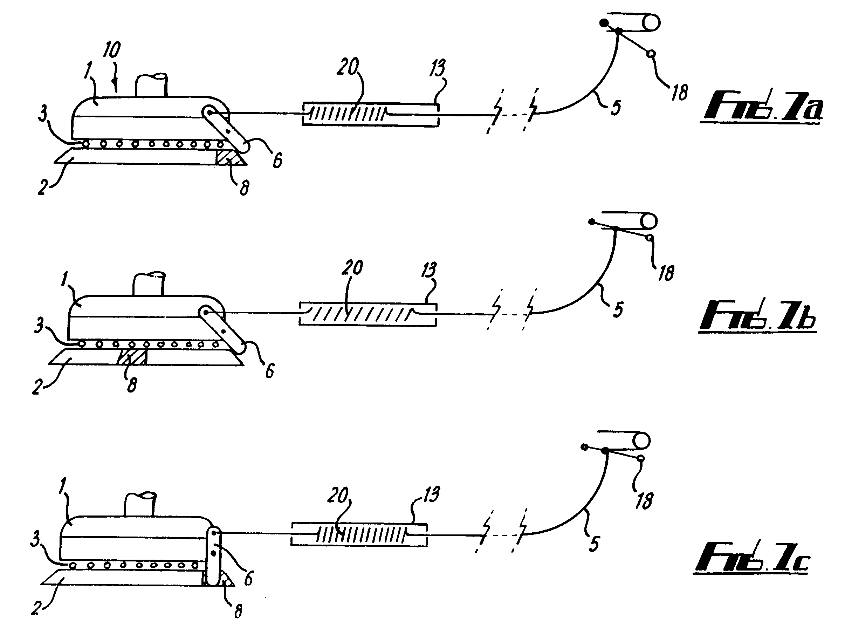

A second embodiment of a catch 6 is shown in Fig 3a to 4b in which the catch 6 is in the form of a fork 26 which, when in the locked position surrounds a lug 27. The lug 27 is disposed on or is formed as an integral part of the second member 2. The fork 26 and lug 27 arrangement of the locking device 4 operates in a similar manner to the bar catch 24. Both arrangements employing a basic male/female engagement principle. As a trolley 14 is pushed forward the castors trail to the fore and aft position. Just before reaching the fore and aft position the lug 27 pushes the fork 26 outwards until engagement takes place.

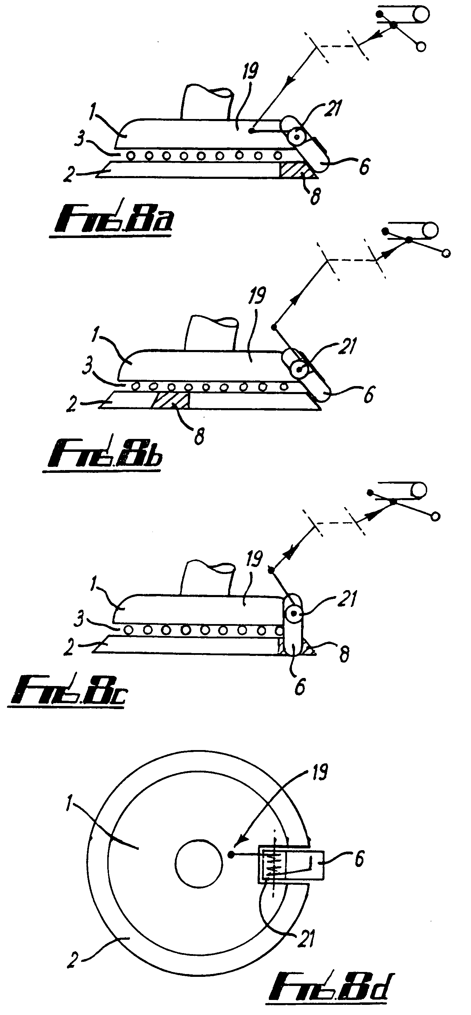

A first embodiment of the spring arrangement is shown in Fig 7a, b and c and has a springbox 13 disposed at a point in the control rod 5. When the operating lever 18 is in a released position (Fig 7a) the spring 20 of the springbox 13 is in an unstretched position. The operating lever 18 can be manually selected and this tensions the spring 20 and biases the catch 6 towards the second member 2, the catch 6 then springs into the slot 8 in the second member 2 when the first and second members 1,2 are in the aligned position (Fig 7c). When the catch 6 is in the slot 8, the spring 20 remains semi-tensioned. When the operating lever 18 is released, the spring 20 springs back to its compressed position and the catch 6 disengages the slot 8.

A second embodiment of the spring arrangement is shown in Fig 8a, b, c and d. In this embodiment the spring is in the form of a rotary spring 21 which biases the catch 6 in an open position. When the operating lever 18 is operated the rotary spring 21 is activated by the control rod 5 via a spring lever 19 such that the catch 6 is biased towards the slot 8 as before.

The release of the locking device 4 can be achieved by gravity or the weight of the steering lever 18 or other components of the device 10.

It is an important feature that the locking device 4 is only in operation during the time that the operating lever 18 is being positively deployed. If the operator releases the operating lever 18 the locking operation is terminated and the catch 6 will disengage the slot 8.

When the catch 6 is not in the locking position the castor is free to swivel through 360 degrees. Each one of the front and rear castors of a trolley 14 can have a castor locking device 10 and the operation of the operating lever 18 can be arranged to operate all the locking devices 4 on all castors or just the rear or front castors or each castor individually and each selected castor will lock only when it is aligned in the fore and aft position.

An empty or laden trolley 14 can have the capability, by manual selection of the operating lever 18, to lock a castor, front or rear, in the fore and aft position. Especially with a laden trolley, the locking of the castors aids steering and prevents the trolley 14 from drifting out from a given direction when cornering and drifting downslope when traversing sloping ground.

The castor locking device 10 can utilise an existing castor and only comes into operation when selected by the trolley operator.

The operating lever 18 is located under the steering handle 22 and is activated by pulling up on the lever 18. On release of the operating lever 18 the castor reverts to its fully swivelling position.

The control rod 5 linking the operating lever 18 to the catch 6 of the castor locking device 10 can be contained inside the chassis of the trolley 14.

The device 10 does not affect stacking or movement of trolleys 14 in a 'train'. The device 10 is also enclosed in a gaiter to prevent dirt and water from entering the device 10 and this gaiter also acts as a bumper. An adjoining castor, if not fitted with a device 10, would be fitted with a corresponding gaiter or bumper.

The device 10 allows a trolley operator to simply select positive steering or free castoring and thereby obtain greater control of the trolley 14. When the device 10 is not locked the castors are free to swivel and the trolley 14 can be pulled in any direction as required, in a supermarket. However, where required locking of some or all of the castors provides ease of manoeuvrability.

## Claims

1. A trolley (14) having a steering handle (22) and a castor locking device (10) comprising first and second members (1, 2), said first member (1) being attachable to a carrying member (16) of the trolley (14), said second member (2) being attachable to a wheel of the trolley (14) and rotationally connected to said first member (1), and locking means (4, 6) are provided for locking the two members (1, 2) in a predetermined position by operation of a control means (5), wherein the locking means (4, 6) are only activated during the operation of the control means (5), characterised in that a spring arrangement (20; 21) is provided and the control means (5) is sprung by the spring arrangement (20; 21) such that when the locking means (4, 6) is activated, the locking means (4, 6) locks said first (1) and second (2) members only when they are in their predetermined position, and where the control means (5) is coupled to the operating lever (18) such that the control means (5) is operated by moving the operating lever (18) and the steering handle (22) towards one another.

2. A trolley (14) as claimed in Claim 1 wherein said first member (1) is in fixed relation to the carrying member (16) of the trolley (14) and said second member (2) is in fixed relation to the wheel of the trolley (14).

3. A trolley (14) as claimed in Claim 1 or 2 wherein said first (1) and second (2) members are rotationally connected by means of bearings (3) disposed between said members (1, 2).

4. A trolley (14) as claimed in any one of Claims 1 to 3 wherein the locking means (4, 6) for selectively locking said first (1) and second (2) members is in the form of a catch which, when operated, interacts with said first (1) and second (2) members preventing relative rotation of the members (1, 2).

5. A trolley (14) as claimed in any one of Claims 1 to 4 wherein the lever (18) is disposed at the steering handle (22).

6. A trolley (14) as claimed in any one of Claims 1 to 5 wherein release of the control means (5) releases the locking means (4, 6).

7. A trolley (14) as claimed in any preceding claim, further comprising a carrying member (16), and front and rear wheels in which any one or all of the front wheels have a castor locking device (10) as defined in any preceding claim.

8. A trolley (14) as claimed in any preceding claim, wherein the control means (5) is deactivated by moving the operating lever (18) and steering handle (22) away from one another.

## Patentansprüche

1. Ein Einkaufswagen (14) mit einem Steuerhandgriff (22) und einer Gleitrollensperrvorrichtung (10), bestehend aus einem ersten und einem zweiten Element (1, 2), wobei das erste Element (1) an einen Ladeteil (16) des Einkaufswagens (14) anfügbar ist und das zweite Element (2) an ein Rad des Einkaufswagens (14) anfügbar ist und mit dem ersten Element (1) drehbar verbunden ist, und Sperrmittel (4, 6) zum Arretieren der zwei Elemente (1, 2) in einer vorbestimmten Position durch Betätigen einer Regeleinrichtung (5) sind bereitgestellt, wobei die Sperrmittel (4, 6) lediglich während der Betätigung der Regeleinrichtung (5) aktiviert werden, dadurch gekennzeichnet, daß eine Federanordnung (20; 21) bereitgestellt ist und die Regeleinrichtung (5) durch die Federanordnung (20; 21) abfedert, so daß, wenn die Sperrmittel (4, 6) aktiviert werden, die Sperrmittel (4, 6) das erste (1) und das zweite (2) Element nur dann arretieren, wenn sie sich in der vorbestimmten Position befinden und wo die Regeleinrichtung (5) mit dem Betätigungshebel (18) verbunden ist, so daß die Regeleinrichtung (5) durch Bewegen des Betätigungshebels (18) und des Steuerhandgriffs (22) gegeneinander betätigt wird.

2. Einkaufswagen (14) gemäß Anspruch 1, wobei das erste Element (1) am Ladeteil (16) des Einkaufswagens (14) befestigt ist, und wobei das zweite Element (2) am Rad des Einkaufswagens (14) befestigt ist.

3. Einkaufswagen (14) gemäß Anspruch 1 oder 2, wobei das erste (1) und das zweite (2) Element mittels zwischen den Elementen (1, 2) angeordneten Auflager (3) drehbar verbunden sind.

4. Einkaufswagen (14) gemäß einem der Ansprüche 1 bis 3, wobei die Sperrmittel (4, 6) zum wahlweisen Arretieren des ersten (1) und zweiten (2) Elements die Form eines Greifhakens aufweisen, der, wenn er betätigt wird, mit dem ersten (1) und dem zweiten (2) Element zusammenspielt, um die relative Drehung der Elemente (1, 2) zu verhindern.

5. Einkaufswagen (14) gemäß einem der Ansprüche 1 bis 4, wobei der Hebel (18) am Steuerhandgriff (22) angebracht ist.

6. Einkaufswagen (14) gemäß einem der Ansprüche 1 bis 5, wobei die Freigabe der Regeleinrichtung (5) die Sperrmittel (4, 6) löst.

7. Einkaufswagen (14) gemäß einem der vorhergehenden Ansprüche, wobei er weiter aus einem Ladeteil (16) und Vorder- und Hinterrädern besteht, wobei eines oder alle der Vorderräder eine wie in einem der vorhergehenden Ansprüche definierte Gleitrollensperrvorrichtung (10) aufweist.

8. Einkaufswagen (14) gemäß einem der vorhergehenden Ansprüche, wobei die Regeleinrichtung (5) durch das Bewegen des Betätigungshebels (18) und des Steuerhandgriffs (22) voneinander weg, deaktiviert wird.

## Revendications

1. Un chariot (14) possédant une poignée de direction (22) et un dispositif de blocage de roulette (10) comprenant des premier et second éléments (1, 2), ledit premier élément (1) pouvant être fixé à un élément porteur (16) du chariot (14), ledit second élément (2) pouvant être fixé à une roue du chariot (14) et étant raccordé de façon rotative au dit premier élément (1), et des moyens de blocage (4, 6) sont fournis pour bloquer les deux éléments (1, 2) dans une position prédéterminée grâce à l'actionnement d'un moyen de commande (5), dans lequel les moyens de blocage (4, 6) ne sont activés que pendant l'actionnement du moyen de commande (5), caractérisé en ce qu'un agencement de ressorts (20 ; 21) est fourni et le moyen de commande (5) est actionné par ressort par l'agencement de ressorts (20 ; 21) de telle sorte que, lorsque le moyen de blocage (4, 6) est activé, le moyen de blocage (4, 6) ne bloque lesdits premier (1) et second (2) éléments que lorsqu'ils sont dans leur position prédéterminée, et dans lequel le moyen de commande (5) est accouplé à la manette d'actionnement (18) de telle sorte que le moyen de commande (5) est actionné en rapprochant la manette d' actionnement (18) et la poignée de direction (22) l'une de l'autre.

2. Un chariot (14) selon la revendication 1 dans lequel ledit premier élément (1) est en relation fixe par rapport à l'élément porteur (16) du chariot (14) et ledit second élément (2) est en relation fixe par rapport à la roue du chariot (14).

3. Un chariot (14) selon la revendication 1 ou 2 dans lequel lesdits premier (1) et second (2) éléments sont raccordés de façon rotative au moyen de paliers (3) disposés entre lesdits éléments (1, 2).

4. Un chariot (14) selon une quelconque des revendications 1 à 3 dans lequel le moyen de blocage (4, 6) servant à bloquer de façon sélective lesdits premier (1) et second (2) éléments a la forme d'un verrouillage, lequel, lorsqu'il est actionné, interagit avec lesdits premier (1) et second (2) éléments empêchant la rotation relative des éléments (1, 2).

5. Un chariot (14) selon une quelconque des revendications 1 à 4 dans lequel la manette (18) est disposée à la poignée de direction (22).

6. Un chariot (14) selon une quelconque des revendications 1 à 5 dans lequel le relâchement du moyen de commande (5) relâche le moyen de blocage (4, 6).

7. Un chariot (14) selon n'importe quelle revendication précédente, comprenant de plus un élément porteur (16), et des roues avant et arrière dans lequel une quelconque des roues avant ou toutes les roues avant possèdent un dispositif de verrouillage de roulette (10) comme défini dans n'importe quelle revendication précédente.

8. Un chariot (14) selon n'importe quelle revendication précédente, dans lequel le moyen de commande (5) est désactivé en écartant la manette d'actionnement (18) et la poignée de direction (22) l'une de l'autre.
